# EUROPÄISCHE PATENTSCHRIFT

(11) **EP 1 941 792 B1**
(45) Veröffentlichungstag und Bekanntmachung des Hinweises auf die Patenterteilung: **03.08.2011**
(21) Anmeldenummer: 07022256.7
(22) Anmeldetag: 16.11.2007
(51) Int. Cl.: A01C 3/00, B01D 21/26, C05F 3/06, B04B 11/08, C02F 11/12, C02F 1/38

(54) **Verfahren zur Trennung einer biologisches Material enthaltenden Dispersion**
Method for separating a dispersion containing biological material
Procédé destiné à la séparation d'une dispersion contenant une matière biologique

(30) Priorität: 01.12.2006 DE 102006057163
(43) Veröffentlichungstag der Anmeldung: 09.07.2008
(73) Patentinhaber: Spaleck Oberflächentechnik GmbH & Co. KG, 46395 Bocholt (DE)
(72) Erfinder: Knuf, Paul, 46397 Bocholt (DE)
(74) Vertreter: Gesthuysen, von Rohr & Eggert

(56) Entgegenhaltungen:
- EP-A- 0 384 329
- EP-A1- 1 757 562
- CH-A- 401 845
- DE-A1- 4 027 581
- DE-A1- 4 215 061
- DE-A1- 19 801 733
- DE-B- 1 172 616
- DE-U1- 29 516 387
- PHILIP A. SCHWEITZER: "Handbook of Separation Techniques for Chemical Engineers" 1988, MCGRAW-HILL , NEW YORK , XP002470329 * Seiten 4-59 - Seiten 4-88; Tabelle 1 * * Seiten 4-70 - Seiten 4-72 * * Seiten 4-77 - Seiten 4-79 *

## Beschreibung

Die vorliegende Erfindung betrifft ein Verfahren nach dem Oberbegriff von Anspruch 1.

Die Erfindung betrifft die Trennung von Schweinegülle und/oder Rindergülle sowie von Gärresten aus Biogasanlagen, insbesondere aus sogenannten Nawaro-Anlagen handeln, die mit aufgeschlossenem, gemahlenem Getreide als biogenes Einsatzmaterial betrieben werden. Es versteht sich, daß die vorgenannte Aufzählung nicht abschließend ist.

Gülle fällt vor allem bei der Massentierhaltung in großen Mengen an und besteht aus einer Mischung von Kot, Harn und Einstreu. Der Feststoff- und der Wassergehalt der Gülle sowie deren Zusammensetzung können dabei stark variieren. Die Gülle wird in den Betrieben gesammelt und, da sie den Abfallbestimmungen unterliegt und somit nicht als Wirtschaftsgut gehandelt werden darf, vorzugsweise für die eigenen Zwecke verwendet. Gülle unterliegt aber strengen Auflagen in bezug auf ihre Verwendung als Düngemittel für die Felderbewirtschaftung. Bei der Nährstoffbilanzierung ist in vielen Fällen der Phosphorgehalt der Gülle der begrenzende Faktor. Gleiches gilt für Gärreste, die beispielsweise bei der Vergärung von Gülle zur Erzeugung von Biogas anfallen. In Nährstoffüberschußgebieten stellen die Entsorgungskosten für phosphorhaltige ein biologisches Material enthaltende Dispersionen, wie Gülle und/oder Gärreste, einen die Wirtschaftlichkeit von Biogasanlagen oder Stallneubauten limitierenden Faktor dar, wobei der hohe Wassergehalt der in Rede stehenden Dispersionen einen Transport in der Regel unwirtschaftlich macht. Eine Biogasanlage mit einer Leistung von 500 kW benötigt beispielsweise allein zur Unterbringung der Phosphormengen ca. 260 ha landwirtschaftlicher Nutzflächen. Ist es erforderlich, Gülle und Gärreste über eine sogenannte Güllebörse abzugeben, sind dafür Kosten von 7 bis 9 €/m³ _{Gülle/Gärrest} zu veranschlagen.

Es werden daher im Stand der Technik mechanische Trennverfahren vorgeschlagen, um biologisches Material enthaltende Dispersionen aufzubereiten, wobei der Flüssiganteil der Dispersion von dem Feststoffanteil getrennt wird. Die Trennung von Gülle kann beispielsweise vor oder nach der Vergärung stattfinden. Dazu werden im Stand der Technik, wie z.B. in DE 4 027 581 A1, unter anderem Schneckenpressen oder Dekanterzentrifugen eingesetzt, wobei der so erhaltene Feststoffanteil mit phosphorhaltigen Bestandteilen angereichert ist. Die so erhaltene flüssige Phase weist einen geringeren Phosphorgehalt auf und kann vor Ort ausgebracht werden, während sich die Feststoffe als Dünger im Gartenbau, als Einstreumaterial oder zur Kompostierung eignen. Dies ist insbesondere für Regionen mit Nährstoffüberschuß von erheblicher Bedeutung. Dabei läßt sich die Anreicherung des Feststoffanteils mit Phosphor weiter erhöhen, wenn der Dispersion vor der mechanischen Trennung Flockungsmittel zugesetzt werden.

Dekanterzentrifugen bieten den Vorteil, daß ein deutlich höherer Grad an Eindickung des abgetrennten Feststoffs erzielt werden kann. Es wird somit in besonders einfacher Weise ein Feststoff erhalten, der ohne weitere Nachbehandlung als Feststoffdünger verwendet werden kann. Durch den Einsatz von Dekanterzentrifugen werden jedoch hohe Kosten verursacht. Im übrigen ist der Einsatz von Pressen und Dekanterzentrifugen mit dem Nachteil verbunden, daß insbesondere bei einstufigem Trennvorgang ein begrenzter Anreicherungsgrad des Feststoffanteils mit phosphorhaltigen Bestandteilen erreicht wird. Schließlich ist bei den aus dem Stand der Technik bekannten Trennverfahren von Nachteil, daß nach der Eindickung des abgetrennten Feststoff sich dieser nur mit verhältnismäßig großem Aufwand wieder von den Pressen und Dekanterzentrifugen lösen bzw. abtrennen läßt. Die besondere Zusammensetzung von Gülle und Gärresten führt zu einem Verbacken der Pressen und Dekanterzentrifugen, so daß es bereits nach kurzem Betrieb notwendig ist, den Preß- bzw. Zentrifugierbetrieb einzustellen und die Pressen bzw. Zentrifugen aufwendig von Hand zu reinigen.

Aufgabe der vorliegenden Erfindung ist es, ein Verfahren der eingangs genannten Art zur Verfügung zu stellen, das es ermöglicht, Gülle und/oder Gärreste in einen Flüssiganteil mit geringem Phosphorgehalt und in einen Feststoffanteil mit hohem Phosphorgehalt bei hohem Wirkungsgrad der Ab-/Anreicherung und bei einfacher Prozeßführung zu trennen.

Die vorgenannte Aufgabe wird bei einem Verfahren mit den Merkmalen von Anspruch 1 gelöst.

Der Erfindung liegt die überraschende Erkenntnis zugrunde, daß sich durch Einsatz von Schälzentrifugen, bei denen der Feststoffanteil mittels wenigstens eines Schälmessers von der Trommel abgeschält wird, bei der Trennung von Gülle und/oder Gärresten ein einfacher und weitgehend vollständiger Austrag des Filterkuchens aus der Trommel möglich ist, ohne daß ein Verbacken des Feststoffanteils mit der Trommel und daraus resultierend die Notwendigkeit einer manuellen Reinigung der Trommel befürchtet werden muß.

Schälzentrifugen werden im Stand der Technik überwiegend eingesetzt für das Abtrennen von (Gleit-)Schleifrückständen, beispielsweise aus Abwässern der metallbearbeitenden Industrie, die sehr feine Partikel aufweisen. Schleifrückstände werden dabei mit sehr hohen Drehzahlen von den Abwässern getrennt. Erfindungsgemäß sollen nunmehr erstmalig Schälzentrifugen zum Trennen von Gülle und/oder Gärresten eingesetzt werden, wobei die Konsistenz von Gülle und/oder Gärresten mit der Konsistenz von Schleifrückständen an sich nicht zu vergleichen ist. Erfolgt das Abtrennen des Feststoffanteils aus Gülle und/oder Gärresten bei hohen Drehzahlen mittels Schälzentrifugen, konnte überraschenderweise festgestellt werden, daß sich sehr hohe Phosphorgehalte im Feststoffanteil einstellen lassen. Die bei der Trennung der Gülle und/oder Gärreste mittels Schälzentrifugen erhaltene Flüssigphase weist dagegen einen deutlich geringeren Phosphorgehalt auf, als dies im Stand der Technik bei Einsatz von Separatoren, Pressen, Filtern und Dekanterzentrifugen überhaupt möglich ist. Die sehr hohe Abreicherung der abgetrennten flüssigen Phase an phosphorhaltigen Bestandteilen ist mit deutlich geringeren Entsorgungskosten verbunden, was insbesondere in Nährstoffüberschußgebieten von Vorteil ist. Beim Zentrifugieren wird nicht nur der hohe Wassergehalt in dem Ausgangsmedium (Gülle, Gärreste) verringert, sondern es wird gleichzeitig auch ein hoher Anteil des Phosphors an den Feststoff gebunden. Der Feststoffanteil kann dann als Dünger in nährstoffarme Regionen verbracht werden. Gleichzeitig kann die abgereicherte Flüssigphase auf vergleichsweise kleinen landwirtschaftlichen Flächen ausgebracht werden.

Vorzugsweise können zur Trennung der Gülle und/oder der Gärreste Vertikal-Schälschleudem eingesetzt werden, bei denen der Filterkuchen durch den Boden ausgeworfen wird. Grundsätzlich können aber auch Horizontal-Schälschleudern eingesetzt werden, die das Auswerfen bei höherer Umgangsgeschwindigkeit erlauben und leistungsfähiger sind, aber wegen der höheren Schälkräfte mit höheren Investitionskosten verbunden sind.

Bei dem Trennvorgang kommt es bei der Erfindung aufgrund von hohen Zentrifugalkräften zur Abscheidung von Feststoffanteilen an dem Mantel der Trommel im Inneren der Schälzentrifuge. Die abgeschiedenen Feststoffanteile bilden in Abhängigkeit von der Zusammensetzung der Gülle und/oder Gärreste eine zum Teil fest an dem Mantel der Trommel anhaftende pastöse oder verfestigte Feststoffschicht, die durch Abschälen mittels der Schälmesser bei geringem Kraftaufwand und sehr sauber von der Trommel entfernt werden kann.

Dagegen hat sich im Zusammenhang mit der Erfindung gezeigt, daß es beispielsweise bei Einsatz sogenannter Prallzentrifugen mit rotierenden Trommeln gerade nicht oder nur teilweise zu einem Aufsteigen des Feststoffanteils aufgrund von Zentrifugalkräften an dem Mantel der Trommel und zu einem Austrag der Feststoffanteile über den oberen Rand der Trommel kommt. Eine solche Prallzentrifuge ist beispielsweise in der DE 24 59 796 A1 beschrieben. Um Dispersionen der in Rede stehenden Art mit einer Prallzentrifuge trennen zu können, ist es daher notwendig, periodisch die Zentrifuge zu stoppen und manuell die Trommel zu reinigen, was arbeits- und kostenintensiv ist. Im Ergebnis hat sich gezeigt, daß Fliehkräfte nicht ausreichen, um den durch Trennung der Dispersion erhaltenen Feststoffanteil aus der Trommel auszutragen. Bei dem erfindungsgemäßen Verfahren wird der Feststoffanteil dagegen mit einem Schäl- bzw. Abstreifmesser mechanisch ausgetragen, was eine sehr einfache und wirkungsvolle Reinigung der Trommel ermöglicht. Die Trommel wird beim Abschälvorgang mit einer Abschäldrehzahl gedreht, wobei das Schälmesser an den Mantel der Trommel vorzugsweise mehrfach angenähert wird und schließlich in die Feststoffschicht eindringt.

Der hohe Anreicherungsgrad des Feststoffanteils mit Phosphor und das Austragen des Feststoffanteils durch Abschälen vom Mantel ermöglichen es vorzugsweise, die Gülle und/oder Gärreste einstufig zu trennen, wobei, vorzugsweise, eine weitere Nachbehandlung des Flüssiganteils und/oder Feststoffanteils nicht vorgesehen ist. Dies bedeutet, daß der bei der einstufigen Trennung erhaltende Flüssiganteil direkt auf eine landwirtschaftliche Fläche ausgebracht und der Feststoffanteil direkt als Dünger verwertet werden kann. Die im Stand der Technik eingesetzten Pressen und Dekanterzentrifugen erfordern dagegen eine mehrstufige Trennung, um annähernd vergleichbare Phosphorgehalte im Feststoffanteil zu gewährleisten.

Das erfindungsgemäße Verfahren sieht vor, daß der Feststoffanteil auf einen Phosphorgehalt zwischen 50 bis 90 %, vorzugsweise zwischen 75 bis 80 %, angereichert wird, jeweils mit Bezug auf den in der Gülle und/oder den Gärresten enthaltenen Gesamt-Phosphorgehalt. Gleichzeitig ist eine Entwässerung um mehr als 70 %, vorzugsweise um mehr als 80 %, möglich. Die vorgenannten Angaben beziehen sich auf die einstufige Trennung der Gülle und/oder Gärreste, wobei grundsätzlich auch eine noch stärkere Anreicherung des Feststoffanteils mit phosphorhaltigen Bestandteilen bzw. eine stärkere Entwässerung möglich ist, sofern das Verfahren mehrstufig ausgeführt wird.

Darüber hinaus ist es mit dem erfindungsgemäßen Verfahren möglich, die Gülle und/oder Gärreste in einem nicht-aufbereiteten Rohzustand zu trennen. Vorzugsweise ist es ohne vorherige Aufbereitung der Gülle und/oder Gärreste, insbesondere ohne Zusatz von Flockungsmitteln oder dgl. möglich, die Gülle und/oder Gärreste in die beiden Phasen bei hohem Abscheidegrad für phosphorhaltige Bestandteile zu trennen. Beispielsweise kann Rohgülle oder Biogasgülle nach der Vergärung der Rohgülle frei von Flockungsmitteln oder anderen Hilfsstoffen, die die Abscheidung von Phosphor unterstützen können, als Einsatzmedium für den Trennvorgang vorgesehen sein. Gleichwohl wird aufgrund der hohen Trennleistung der eingesetzten Schälzentrifugen-Technologie ein hoher Anreicherungsgrad von Phosphor im Feststoffanteil sichergestellt.

Während eines Abschälvorgangs kann die Abschäldrehzahl der Trommel zwischen 100 bis 500 U/min, vorzugsweise zwischen 200 bis 250 U/min, betragen. Im Ergebnis wird die gebildete Feststoffschicht von dem Mantel bei Drehung der Trommel abgeschält. Die Abschäldauer kann dabei 1 bis 5 Minuten, vorzugsweise ca. 3 Minuten, betragen. Beim Abschälvorgang wird das Schälmesser mehrfach an den Mantel der Trommel herangefahren und wieder vom Mantel weggefahren. Dabei wird das Schälmesser vorzugsweise mit einer Näherungsgeschwindigkeit von 5 bis 15 mm/s, vorzugsweise von 8 bis 10 mm/s, an den Mantel herangefahren. Weiter vorzugsweise ist es vorgesehen, daß das Schälmesser bis zu einem Abstand von weniger als 1 mm, vorzugsweise von weniger als 0,5 mm, an den Mantel herangefahren wird. Die gewählte Näherungsgeschwindigkeit und das mehrfache Annähern an den Mantel der Trommel bis zu dem Schälabstand stellen sicher, daß ein großer Teil der gebildeten Feststoffschicht von dem Mantel abgeschieden wird. Im Zusammenhang mit der Erfindung hat sich gezeigt, daß die bei der Trennung von Gülle und/oder von Gärresten ausgebildete Feststoffschicht bei den vorgenannten Betriebsbedingungen des Abschälvorgangs besonders gut von dem Mantel abgeschält werden kann.

Darüber hinaus kann vorgesehen sein, daß die Feststoffschicht während des Abschälvorgangs im wesentlichen vollständig abgeschält wird. Dadurch entfällt die Notwendigkeit einer manuellen Reinigung der Trommel. Wird dagegen ein Restanteil des Feststoffs beim Abschälvorgang nicht vom Mantel entfernt, kann sich eine Umwucht bilden, die aufgrund der hohen Drehzahlen bei einem nachfolgenden Trennvorgang zu Vibrationen und erhöhtem Verschleiß der Zentrifuge beitragen kann. Während des Abschälvorgangs wird der Feststoff vorzugsweise kontinuierlich aus der Trommel ausgetragen. Grundsätzlich ist es aber auch möglich, daß der Feststoff diskontinuierlich ausgetragen wird.

Die Gülle und/oder Gärreste können während des Trennvorgangs vorzugsweise kontinuierlich oder auch diskontinuierlich in die Trommel eingeleitet werden, vorzugsweise, nachdem die Trommel eine Trennungsdrehzahl erreicht hat. Mit Ablauf der Trennungsdauer wird die Zufuhr der Gülle und/oder Gärreste in die Trommel gestoppt. Während des Trennvorgangs kann der abgetrennte Flüssiganteil kontinuierlich aus der Trommel abgeleitet werden, was einen hohen Durchsatz der zu trennenden Gülle und/oder Gärreste sicherstellt.

Um eine ausreichende Anreicherung des Feststoffs mit phosphorhaltigen Bestandteilen zu gewährleisten, kann die Trennungsdrehzahl der Trommel während des Trennvorgangs zwischen 800 bis 3.000 U/min betragen, vorzugsweise zwischen 1.000 und 2.450 U/min, insbesondere mehr als 2.000 U/min. Die Trennungsdauer liegt im Bereich zwischen 2 bis 20 Minuten, vorzugsweise zwischen 3 bis 15 Minuten, insbesondere bei ca. 10 Minuten, wobei die Trommel bei der Trennungsdrehzahl betrieben wird bzw. rotiert. Die vorgenannten Werte tragen wiederum dazu bei, eine ausreichende Anreicherung des Feststoffanteils mit Phosphor zu gewährleisten und eine Konsistenz des Feststoffanteils sicherzustellen, der das Abtrennen des Feststoffanteils mittels Schälmessern überhaupt erst ermöglicht. Ist der Feststoffanteil zu stark komprimiert, kommt es zu einem erhöhten Verschleiß der Schälmesser. Wird der Feststoffanteil dagegen beim Zentrifugieren der Gülle und/oder Gärreste nicht ausreichend stark komprimiert, kann es zu Problemen beim Austrag des Feststoffanteils aus der Trommel kommen, insbesondere zu einem Verstopfen der Austragsöffnungen.

Nach Beendigung des Trennvorgangs kann die Trommel bis zum Stillstand abgebremst werden, wobei, vorzugsweise, ein in der Trommel befindlicher Restflüssiganteil nach dem Trennvorgang aus der Trommel abgeleitet wird. Nach Beendigung des Trennvorgangs und ggf. nach dem Ableiten des Restflüssiganteils wird die Trommel dann auf die Abschäldrehzahl beschleunigt. Im Ergebnis kann bei dem erfindungsgemäßen Verfahren eine Mehrzahl von aufeinanderfolgenden Trenn- und Abschälvorgängen vorgesehen sein.

Das erfindungsgemäße Verfahren ermöglicht es, die Gülle und/oder Gärreste mit einem Durchsatz von 200 bis 5.000 1/h, insbesondere von ca. 400 bis 3.000 l/h, zu trennen. Der Volumenstrom des Flüssiganteils, der während eines Trennvorgangs aus der Trommel ausgetragen wird, kann dabei 100 bis 3.000 l/h, vorzugsweise ca. 300 bis 2.250 l/h, betragen. Die Feststoffmenge, die während eines Abschälvorgangs ausgetragen wird, beträgt in diesem Fall ca. 2 bis 350 kg, vorzugsweise ca. 4 bis 120 kg. Das erfindungsgemäße Verfahren ist im Ergebnis ausgelegt auf die Trennung von Dispersionen mit kleineren bis mittleren Volumenströmen und damit geeignet zur Trennung vor Ort bei einem landwirtschaftlichen Unternehmen, ohne daß es notwendig ist, zunächst die Dispersion zu sammeln und zum Ort der Trennung abzutransportieren. Die Trennung beispielsweise von Gülle und von Gärresten kann unmittelbar am Ort des landwirtschaftlichen Unternehmens erfolgen, was die Kosten für die Aufbereitung weiter senkt. Es versteht sich, daß bei entsprechender konstruktiver Auslegung der Zentrifugen der Durchsatz der Gülle und/oder Gärreste gesteigert werden kann.

Aus Sicherheitsgründen kann eine Drehzahlüberwachung vorgesehen sein, wobei die Drehzahl der Trommel automatisch geregelt wird und die Drehzahl der Trommel bei Erreichen einer maximalen Drehzahl automatisch abgebremst wird. Beispielsweise kann vorgesehen sein, daß bei Überschreiten der maximalen Drehzahl von beispielsweise 2.450 U/min die Schälzentrifuge automatisch abgeschaltet wird. Dabei ist es möglich, daß die Drehzahl kurzzeitig einen Wert von bis zu 2.650 U/min erreicht.

Bei Einsatz von Gärresten mit einem Trockensubstanzgehalt von 10 bis 12 % und einem Gesamtphosphorgehalt (P₂O₅) von 5 bis 7 kg/m³ wird bei Anwendung des zuvor beschriebenen Verfahrens ein Flüssiganteil von ca. 75 % bezogen auf die Menge der eingesetzten Gärreste erhalten mit einem Trockensubstanzgehalt von 4 bis 7 % und einem Gesamtphosphorgehalt (P₂O₅) von 2 bis 3 kg/m³. Gleichzeitig fällt ein Feststoffanteil von ca. 25 Gew.-% bezogen auf die Menge der eingesetzten Gärreste an mit einem Trockensubstanzgehalt von 20 bis 30 Gew.-% und einem Gesamtphosphorgehalt (P₂O₅) von 8 bis 10 kg/m³. Im Ergebnis lassen sich mit dem zuvor beschriebenen Verfahren einstufig mehr als 50 bis 80 % des Phosphors, der in den Gärresten enthalten ist, an den Feststoff binden.

Im einzelnen gibt es eine Vielzahl von Möglichkeiten, das erfindungsgemäße Verfahren auszugestalten und weiterzubilden, wobei einerseits auf die abhängigen Patentansprüche und andererseits auf die nachfolgende Beschreibung eines bevorzugten Verfahrensablaufs unter Bezugnahme auf die Zeichnung verwiesen wird. Im übrigen läßt es die Erfindung bedarfsweise zu, die in den Ansprüchen und/oder die anhand der Zeichnung nachfolgend offenbarten und beschriebenen Merkmale miteinander zu kombinieren, auch wenn dies nicht im einzelnen beschrieben ist. In der Zeichnung zeigen
- Fig. 1: eine schematische Querschnittsansicht einer zur Durchführung des erfindungsgemäßen Verfahrens eingesetzten Schälzentrifuge im Stillstand,
- Fig. 2: die in Fig. 1 dargestellte Schälzentrifuge während eines Trennvorgangs in einer schematischen Querschnittsansicht und
- Fig. 3: die in Fig. 1 dargestellte Schälzentrifuge beim Feststoffaustrag in einer schematischen Querschnittsansicht.

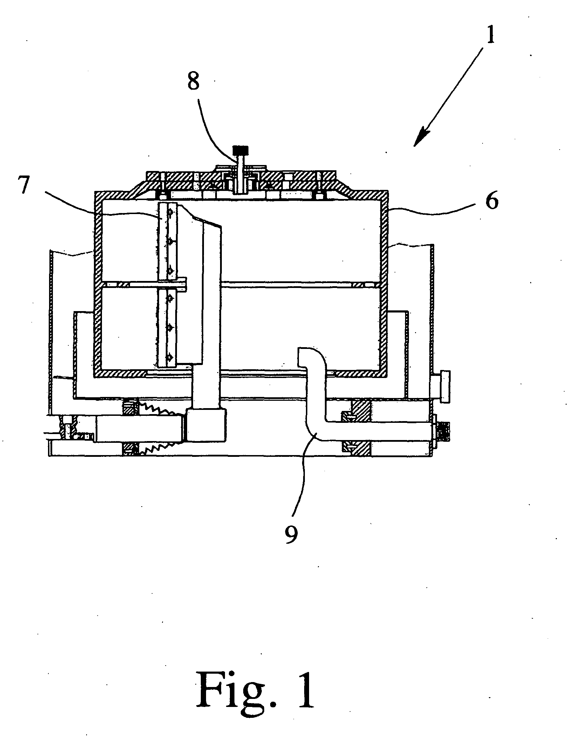

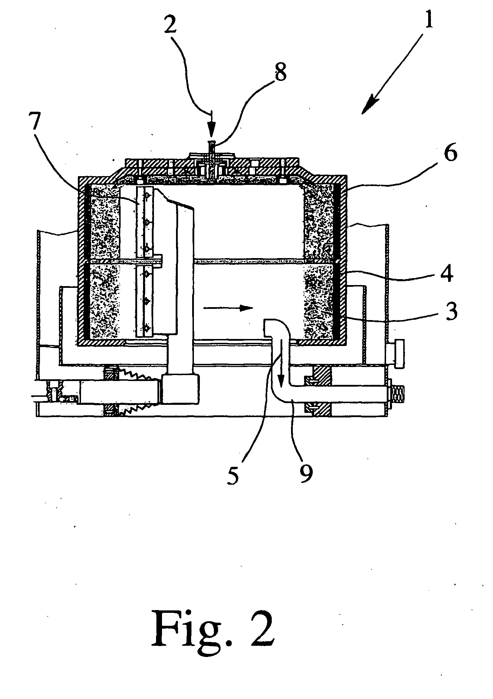

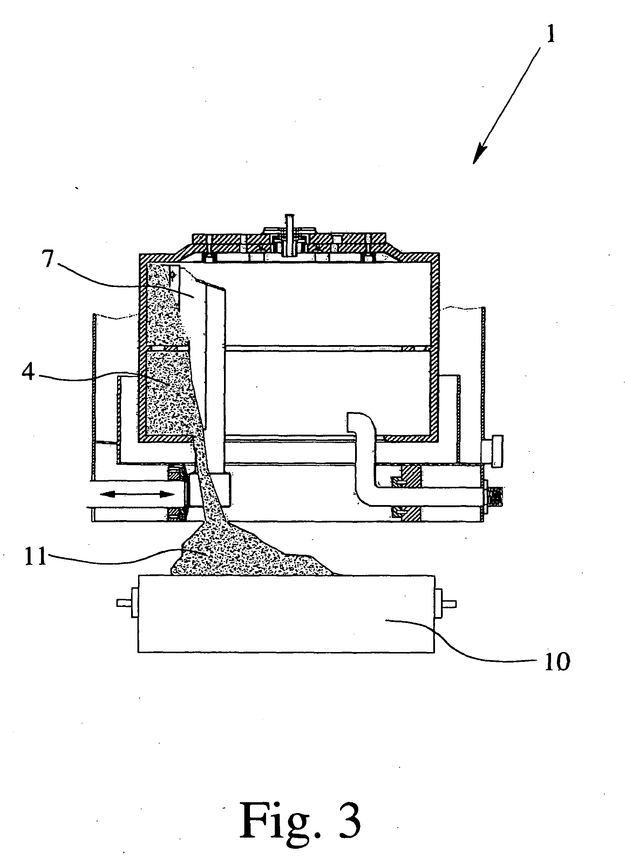

Auf der Grundlage der Fig. 1 bis 3 wird ein Verfahren exemplarisch beschrieben, wobei Gülle in einem Trennvorgang mittels einer Schälzentrifuge 1 getrennt wird. Bei dem Trennvorgang kommt es dabei zur Auftrennung der Rohgülle 2 in einen an Phosphor abgereicherten Flüssiganteil 3 und in einen mit Phosphor angereicherten Feststoffanteil 4. Der Trennvorgang ist in Fig. 2 dargestellt. Der Flüssiganteil 3 wird als flüssiger Produktstrom 5 kontinuierlich beim Trennvorgang abgeleitet. Die Schälzentrifuge 1 weist eine um eine Rotationsachse drehbar gelagerte Trommel 6 und ein Schälmesser 7 auf. Darüber hinaus ist eine Zuführleitung 8 für die Zufuhr der Rohgülle in die Trommel 6 und eine Abführleitung 9 für den flüssigen Produktstrom 5 vorgesehen. Darüber hinaus ist ein in Fig. 3 dargestelltes Förderband 10 vorgesehen zur Abfuhr des aus der Trommel 2 über eine nicht im einzelnen dargestellte Öffnung als Feststoffprodukt 11 ausgetragenen Feststoffanteils 4.

Ein Arbeitszyklus zur Trennung von Gülle mittels der in den Fig. 1 bis 3 dargestellten Schälzentrifuge 1 läuft wie folgt ab. Zunächst wird die Rohgülle 2 über eine nicht dargestellte Pumpe kontinuierlich in die Trommel 6 geleitet. Der Durchsatz der Gülle beträgt vorzugsweise zwischen 400 bis 3.000 l/h. Beim Trennvorgang wird die Trommel mit einer Drehzahl von ca. 1.000 bis 2.450 U/min gedreht, wobei die Drehzahl über einen Frequenzumrichter geregelt ist. Die zu trennende Rohgülle 2 wird in die Trommel 6 eingeleitet, nachdem die Trommel 6 die Trennungsdrehzahl erreicht hat. Die Trennungsdrehzahl wird zwischen 3 bis 15 Minuten beibehalten, vorzugsweise für ca. 10 Minuten. In diesem Zeitraum fließen ca. 300 bis 2.250 l/h des beim Zentrifugieren in der Trommel 6 abgetrennten Flüssiganteils 3 als Produktstrom 5 in einen nicht dargestellten Auffangtank mit einem Fassungsvermögen von ca. 800 1 ab. Von dort wird der Produktstrom 5 in ein Endlager gepumpt. Nach dem Ende des Trennvorgangs bzw. nach Ablauf der Trennungsdauer wird die Zufuhr von Rohgülle 2 gestoppt und die Trommel 6 bis zum Stillstand abgebremst. Der restliche Flüssiganteil in der Trommel 6 fließt über eine schräg angeordnete nicht im einzelnen dargestellte Restwasserwanne ebenfalls in den Auffangtank ab. Anschließend wird die Restwasserwanne seitlich verfahren, so daß eine Öffnung im Boden der Trommel 6 freigegeben wird.

Zum Austrag des Feststoffanteils 4 wird die Trommel 6 auf eine Drehzahl von ca. 200 bis 250 U/min beschleunigt. Diese Abschäldrehzahl wird ca. 3 Minuten beibehalten, wobei das Schälmesser 7 über einen Pneumatikzylinder und Ölbremsmotor viermal bis auf einen Abstand von 0,5 mm an den Mantel der Trommel 6 herangefahren wird. Die Näherungsgeschwindigkeit des Schälmessers 7 beträgt dabei ca. 8 bis 10 mm/s. Bei dem zuvor beschriebenen Abschälvorgang wird der Feststoffanteil 4 im wesentlichen vollständig von der Trommel 6 abgetrennt und als Feststoffprodukt 11 im wesentlichen vollständig ausgetragen. Die Feststoffmenge pro Arbeitszyklus bzw. pro Abschälvorgang liegt dabei zwischen 4 und 120 kg. Das Schälmesser 7 ist zweiteilig ausgebildet und besteht aus gehärtetem Stahl oder Edelstahl. Nach Beendigung des Abschälvorgangs wird in einem Spülvorgang die Trommel 6 gespült. Im Anschluß an den Spülvorgang kann sich erneut ein Trennvorgang in der oben beschriebenen Weise anschließen. Die nachfolgend angegebene Tabelle zeigt die Ergebnisse der Trennung von Gärresten nach dem erfindungsgemäßen Verfahren:

| | | **eingesetzte Dispersion (Gärrest)** | **Flüssigphase nach Trennung** | **Feststoffphase nach Trennung** |
|---|---|---|---|---|
| Wassergehalt | [%] | 89,7 | 94,3 | 77,4 |
| Trockensubstanz | [%] | 10,3 | 5,7 | 22,6 |
| Rohdichte | [g/l] | 1011 | 1008 | 651 |
| pH-Wert (CaCl₂) | | 8,0 | 8,1 | 8,4 |
| Salzgehalt | [g/l] | 19,07 | 19,91 | 7,87 |
| | | | | |
| Nährstoffe - gesamt in FS | | | | |
| Stickstoff (N) | [kg/m³] | 9,81 | 9,37 | 7,49 |
| Phosphor (P₂O₅) | [kg/m³] | 5,0 | 2,31 | 9,01 |
| Kalium (K₂O) | [kg/m³] | 6,32 | 4,3 | 3,18 |
| Magnesium (MgO) | [kg/m³] | 1,54 | 0,38 | 4,16 |
| basisch wirkende Stoffe (CaO) | [kg/m³] | 3,26 | 1,62 | 4,15 |
| Schwefel (S) | [kg/m³] | 0,67 | 0,45 | 0,55 |

## Patentansprüche

1. Verfahren zur Trennung von Gülle und/oder von Gärresten in einen Flüssiganteil (3) mit gegenüber der Dispersion abgereichertem Phosphorgehalt und in einen Feststoffanteil (4) mit angereichertem Phosphorgehalt, wobei der Feststoffanteil (4) mechanisch von dem Flüssiganteil (3) in einem Trennvorgang getrennt wird und wobei bei dem Trennvorgang eine Anreicherung von Phosphor im Feststoffanteil (4) erfolgt, **dadurch gekennzeichnet, daß** die Gülle und/oder die Gärreste der Trommel (6) einer Schälzentrifuge zugeführt und die Gülle und/oder die Gärreste in der Trommel (6) zentrifugiert wird bzw. werden, wobei sich der Feststoffanteil (4) während eines Trennvorgangs aufgrund von Zentrifugalkräften an einem Mantel der Trommel (6) ablagert und eine Feststoffschicht bildet, wobei der Flüssiganteil (3) getrennt vom Feststoffanteil (4) aus der Trommel (6) abgeleitet wird, wobei die Feststoffschicht mittels wenigstens eines Schälmessers (7) der Schälzentrifuge (1) von dem Mantel in einem Abschälvorgang abgeschält und der abgeschälte Feststoffanteil (4) aus der Trommel (6) ausgetragen wird, wobei die Trennung der Gülle und/oder Gärreste ohne Zugabe von Flockungsmitteln erfolgt, wobei die Gülle und/oder Gärreste einstufig getrennt wird bzw. werden und wobei eine Nachbehandlung des Flüssiganteils zur weiteren Abscheidung von Phosphor nicht vorgesehen ist.

2. Verfahren nach Anspruch 1, **dadurch gekennzeichnet, daß** der Feststoffanteil (4) auf einen Phosphorgehalt von größer als 50 % bis 80 %, vorzugsweise bis 90 % angereichert wird, jeweils mit Bezug auf den in der Gülle und/oder den Gärresten enthaltenen Phosphorgehalt.

3. Verfahren nach Anspruch 1 oder 2, **dadurch gekennzeichnet, daß** die Gülle und/oder die Gärreste im nicht-aufbereiteten Rohzustand getrennt wird.

4. Verfahren nach einem der vorhergehenden Ansprüche, **dadurch gekennzeichnet, daß** die Abschäldrehzahl der Trommel (6) während des Abschälvorgangs zwischen 100 bis 500 U/min, vorzugsweise zwischen 200 bis 250 U/min, beträgt, wobei, vorzugsweise, die Trommel (6) über eine Abschäldauer von 1 bis 5 min, vorzugsweise ca. 3 min, bei der Abschäldrehzahl betrieben wird.

5. Verfahren nach einem der vorhergehenden Ansprüche, **dadurch gekennzeichnet, daß** das Schälmesser (7) mit einer Näherungsgeschwindigkeit von 5 bis 15 mm/s, vorzugsweise von 8 bis 10 mm/s, an den Mantel herangefahren wird, wobei, vorzugsweise, das Schälmesser (7) bis zu einem Schälabstand von weniger als 1 mm, vorzugsweise von weniger als 0,5 mm, an den Mantel herangefahren wird.

6. Verfahren nach einem der vorhergehenden Ansprüche, **dadurch gekennzeichnet, daß** der Feststoffanteil (4) während des Abschälvorgangs im wesentlichen vollständig abgeschält wird.

7. Verfahren nach einem der vorhergehenden Ansprüche, **dadurch gekennzeichnet, daß** der Feststoffanteil (4) während des Abschälvorgangs und/oder der Flüssiganteil (3) während des Trennvorgangs kontinuierlich aus der Trommel (6) ausgetragen wird bzw. werden und/oder die Gülle und/oder die Gärreste während des Trennvorgangs kontinuierlich bis zum Ablauf einer Trennungsdauer in die Trommel (6) eingeleitet wird bzw. werden, vorzugsweise, nachdem die Trommel (6) eine Trennungsdrehzahl erreicht hat.

8. Verfahren nach einem der vorhergehenden Ansprüche, **dadurch gekennzeichnet, daß** die Trennungsdrehzahl der Trommel (6) während des Trennvorgangs zwischen 800 bis 3000 U/min beträgt, vorzugsweise zwischen 1000 bis 2450 U/min, und/oder daß die Trommel (6) über eine Trennungsdauer von 2 bis 20 min, vorzugsweise von 3 bis 15 min, insbesondere von ca. 10 min, bei der Trennungsdrehzahl betrieben wird.

9. Verfahren nach einem der vorhergehenden Ansprüche, **dadurch gekennzeichnet, daß** die Trommel (6) nach Beendigung des Trennvorgangs bis zum Stillstand abgebremst wird.

10. Verfahren nach einem der vorhergehenden Ansprüche, **dadurch gekennzeichnet, daß** ein in der Trommel (6) befindlicher Restflüssiganteils nach dem Trennvorgang aus der Trommel (6) abgeleitet wird.

11. Verfahren nach einem der vorhergehenden Ansprüche, **dadurch gekennzeichnet, daß** die Trommel (6) nach Beendigung des Trennvorgangs und ggf. nach dem Ableiten des Restflüssiganteils auf die Abschäldrehzahl beschleunigt wird.

## Claims

1. A method for separating liquid manure and/or fermentation residues into a liquid component (3) with a phosphorous content which is reduced compared to the dispersion and into a solid component (4) with an enriched phosphorous content, the solid component (4) being separated mechanically from the liquid component (3) in a separation process and the solid component (4) being enriched with phosphorous during the separation process, **characterised in that** the liquid manure and/or fermentation residues are fed to the drum (6) of a peeler centrifuge and the liquid manure and/or fermentation residues is/are centrifuged in the drum (6), the solid component (4) being deposited on a lining of the drum (6) during a separation process owing to centrifugal forces and forming a solid layer, the liquid component (3) being removed from the drum (6) separately from the solid component (4), the solid layer being peeled off from the lining in a peel-off process by means of at least one peeling knife (7) of the peeler centrifuge (1) and the peeled-off solid component (4) being discharged from the drum (6), the liquid manure and/or fermentation residues being separated without the addition of flocculating agents, the liquid manure and/or fermentation residues being separated in a single step and there being provided no subsequent treatment of the liquid component for further separation of phosphorous.

2. The method according to claim 1, **characterised in that** the solid component (4) is enriched to a phosphorous content of more than 50 % to 80 %, preferably up to 90 %, in each case based on the phosphorous content contained in the liquid manure and/or fermentation residues.

3. The method according to either claim 1 or claim 2, **characterised in that** the liquid manure and/or fermentation residues is/are separated in the unprocessed crude state.

4. The method according to any one of the preceding claims, **characterised in that** the peel-off speed of the drum (6) during the peel-off process is between 100 to 500 rpm, preferably between 200 to 250 rpm, the drum (6) preferably being operated over a peel-off period of 1 to 5 min, preferably approximately 3 min, at the peel-off speed.

5. The method according to any one of the preceding claims, **characterised in that** the peeling knife (7) is advanced along the lining at an approach speed of 5 to 15 mm/s, preferably of 8 to 10 mm/s, the peeling knife (7) preferably being advanced along the lining up to a peeling distance of less than 1 mm, preferably less than 0.5 mm.

6. The method according to any one of the preceding claims, **characterised in that** the solid component (4) is peeled off substantially completely during the peel-off process.

7. The method according to any one of the preceding claims, **characterised in that** the solid component (4) is discharged continuously from the drum (6) during the peel-off process and/or the liquid component (3) is discharged continuously from the drum (6) during the separation process and/or the liquid manure and/or the fermentation residues is/are introduced continuously into the drum (6) during the separation process until a separation period has elapsed, preferably once the drum (6) has reached a separating rotational speed.

8. The method according to any one of the preceding claims, **characterised in that** the separating rotational speed of the drum (6) during the separation process is between 800 and 3000 rpm, preferably between 1000 and 2450 rpm, and/or **in that** the drum (6) is operated at the separation rotational speed over a separation period of 2 to 20 min, preferably 3 to 15 min, in particular approximately 10 min.

9. The method according to any one of the preceding claims, **characterised in that** the drum (6) is decelerated until stationary once the separation process has ended.

10. The method according to any one of the preceding claims, **characterised in that** a residual liquid content found in the drum (6) is removed from the drum (6) after the separation process.

11. The method according to any one of the preceding claims, **characterised in that** the drum (6) is accelerated to the peel-off speed once the separation process has ended and optionally once the residual liquid content has been removed.

## Revendications

1. Processus de séparation de lisier et/ou de restes de fermentation dans une part liquide (3) avec une teneur en phosphore appauvrie par rapport à la dispersion et dans une part de matière solide (4) avec une teneur en phosphore enrichie, la part de matière solide (4) étant séparée mécaniquement de la part liquide (3) dans un processus de séparation et lors du processus de séparation, un enrichissement de phosphore dans la part de matière solide (4) ayant lieu, **caractérisé en ce que** le lisier et/ou les restes de fermentation est ou sont amené(s) dans le tambour (6) d'une centrifugeuse avec racleur et le lisier et/ou les restes de fermentation est ou sont centrifugé(s) dans le tambour (6), sous l'effet des forces centrifuges, pendant un processus de séparation, la part de matière solide (4) se déposant sur une enveloppe du tambour (6) et formant une couche de matière solide, la part liquide (3) étant évacuée hors du tambour (6) séparément de la part de matière solide (4), la couche de matière solide étant pelée de l'enveloppe au moyen d'au moins un couteau racleur (7) de la centrifugeuse avec racleur (1), lors d'un processus de pelage et la part de matière solide (4) pelée étant déchargée du tambour(6), la séparation du lisier et/ou des restes de fermentation s'effectuant sans ajout d'agents floculants, le lisier et/ou les restes de fermentation étant séparé(s) en une étape et aucun post-traitement de la part liquide, pour la séparation ultérieure de phosphore n'étant prévu.

2. Procédé selon la revendication 1, **caractérisé en ce que** la part de matière solide (4) est enrichie à une teneur en phosphore supérieure à de 50 % à 80 %, de préférence de 90 %, chaque fois en rapport avec la teneur en phosphore contenu dans le lisier et/ou dans les restes de fermentation.

3. Procédé selon la revendication 1 ou 2, **caractérisé en ce que** le lisier et/ou les restes de fermentation est ou sont séparé(s) à l'état brut non préparé.

4. Procédé selon l'une quelconque des revendications précédentes, **caractérisé en ce que** la vitesse de pelage du tambour (6) pendant le processus de pelage est comprise entre 100 à 500 t/mn, de préférence entre 200 à 250 t/mn, le tambour (6) étant actionné de préférence sur une durée de pelage de 1 à 5 mn, de préférence d'environ 3 mn, à la vitesse de pelage.

5. Procédé selon l'une quelconque des revendications précédentes, **caractérisé en ce que** le couteau racleur (7) est ramené vers l'enveloppe à une vitesse d'approche de 5 à 15 mm/s, de préférence de 8 à 10 mm/s, le couteau racleur (7) étant ramené de préférence vers l'enveloppe jusqu'à une distance de pelage inférieure à 1 mm, de préférence inférieure à 0,5 mm.

6. Procédé selon l'une quelconque des revendications précédentes, **caractérisé en ce que** la part de matière solide (4) est sensiblement pelée en totalité pendant le processus de pelage.

7. Procédé selon l'une quelconque des revendications précédentes, **caractérisé en ce que** pendant le processus de pelage, la part de matière solide (4) et/ou pendant le processus de séparation, la part liquide (3) est ou sont évacuée(s) en continu hors du tambour (6) et/ou, pendant le processus de séparation, le lisier et/ou les restes de fermentation est ou sont introduit(s) en continu dans le tambour (6) jusqu'à écoulement d'une durée de séparation, de préférence une fois que le tambour (6) a atteint une vitesse de séparation.

8. Procédé selon l'une quelconque des revendications précédentes, **caractérisé en ce que**, pendant le processus de séparation, la vitesse de séparation du tambour (6) est comprise entre 800 à 3000 t/mn, de préférence entre 1000 à 2450 t/mn et/ou **en ce que** le tambour (6) est actionné sur une durée de séparation de 2 à 20 mn, de préférence de 3 à 15 mn, notamment d'environ 10 mn, à la vitesse de séparation.

9. Procédé selon l'une quelconque des revendications précédentes, **caractérisé en ce qu'**après achèvement du processus de séparation, le tambour (6) est freiné jusqu'à l'arrêt complet.

10. Procédé selon l'une quelconque des revendications précédentes, **caractérisé en ce qu'**une part liquide résiduelle se trouvant dans le tambour (6) est évacuée hors du tambour (6) après le processus de séparation.

11. Procédé selon l'une quelconque des revendications précédentes, **caractérisé en ce que**, après achèvement du processus de séparation et le cas échéant, après l'évacuation de la part liquide résiduelle, le tambour (6) est accéléré à la vitesse de pelage.
